# EUROPÄISCHE PATENTSCHRIFT

(11) **EP 3 269 594 B1**
(45) Veröffentlichungstag und Bekanntmachung des Hinweises auf die Patenterteilung: **20.03.2019**
(21) Anmeldenummer: 17173504.6
(22) Anmeldetag: 30.05.2017
(51) Int. Cl.: B60P 7/08, B66C 1/12, B65B 13/02, B65B 27/10, B66C 1/18, B25B 25/00

(54) **GURTSPANNER FÜR GEBINDE BALKENFÖRMIGER KÖRPER**
BELT TENSIONER FOR CONTAINERS OF BAR-FORM BODY
TENDEUR DE SANGLES POUR EMBALLAGES DE CORPS EN FORME DE BARRE

(30) Priorität: 13.07.2016 DE 102016112823
(43) Veröffentlichungstag der Anmeldung: 17.01.2018
(73) Patentinhaber: Dr. Burkowsky, Michael, 31787 Hameln (DE)
(72) Erfinder: Dr. Burkowsky, Michael, 31787 Hameln (DE)
(74) Vertreter: Farago-Schauer, Peter Andreas

(56) Entgegenhaltungen:
- DE-B3-102014 101 438
- DE-U1-202010 012 153

## Beschreibung

Die vorliegende Erfindung betrifft einen Gurtspanner gemäß dem Oberbegriff des Patentanspruchs 1 für ein Gebinde balkenförmiger Körper, die von einem Gurt umspannt werden.

Ein derartiger Gurtspanner geht beispielsweise aus der DE 10 2014 101438 B3 hervor.

Balkenförmige Körper oder auch nur kurz Balken genannt, wie beispielsweise Holzbalken oder Holzscheite aus Baumstämmen und dergleichen, werden üblicherweise durch Gurten oder Käfigkonstruktionen zusammengehalten und so zusammengehalten hochgehoben, getragen, befördert und/oder bearbeitet. Die Balken oder Holzbalken sind dabei bevorzugt unregelmäßig sowohl hinsichtlich der Umfangslinie als auch entlang einer Länge. Beim Tragen des Gebindes solcher Balken an dem ihn umspannendenden Gurt hebt sich der Gurt im Scheitelbereich des Gebindes vom Umfang ab und die Balken verschieben sich gegenseitig. Bei einem reinen Zusammenspannen der Balken zu dem Gebinde verschieben sich die Balken durch das Eigengewicht und durch ein Arbeiten des Holzes so, dass der Gurt danach lockerer sitz als vor der Verschiebung. Dadurch lockert sich das Gebinde, und der Gurt muss nachgespannt werden. Nachteilhaft ist dabei, wenn der Gurt deshalb von Zeit zu Zeit manuell nachgespannt werden muss. Insbesondere lockert sich das Gebinde beträchtlich, wenn die Holzbalken an einer Stelle quer zu einer Längsachse des Gebindes abgesägt werden. Dabei kommt es alleine schon durch die Unregelmäßigkeiten eines Verlaufs und einer Oberfläche der Holzbalken zu einem näher Zusammenfallen der Holzbalken, wodurch sich das Gebinde, das auch als Bund bezeichnet werden kann, lockert. Im oberen Bereich des Gebindes liegen die Balken gelockerter Gebinde dann oft lose in dem Gurt und gefährden die Stabilität des gesamten Gebindes. Auch bei einem Heben und Absetzen des Gebindes lockert sich der Gurt. Zudem besteht die Gefahr, dass indem sich die Balken gegenseitig verschieben, plötzlich das Gebinde an Umfang verliert und sich der Gurt dadurch lockert. Bei einem gelockerten Gurt und gelockerten Gebinde werden die Balken nicht mehr so fest in ihrer Lage gehalten wie vor der Lockerung. Ein Absägen eines gelockerten Gebindes von Holzbalken oder Holzstämmen wird dabei problematisch und gefährlich.

Eine Lockerung des Gurts bei einem gurtgehaltenen Gebinde würde bei einem Absägen zu ruckartigen Verschiebungen der Balken führen. Dabei kann beispielsweise das Sägeblatt beschädigt oder eingeklemmt werden. Aus abgesägten Scheiben eines Gebindes, beispielsweise aus Holzscheiten mit geringer Länge, können durch umspannen mit einem Gurt keine neuen, stabile Gebinde hergestellt werden. Durch die Umfangskraft des Gurtes, die in Richtung der Mitte des Gebindes wirkt bildet sich ein Kraftschluss entlang des Umfanges des Gebindes, der das sichere Einspannen der Holzscheite in der Mitte des Gebindes verhindert. Aus der Mitte eines solchen Gebindes können dann erfahrungsgemäß Holzscheite herausfallen. Mit zunehmendem Umfang solcher Gebinde nimmt auch ihre Instabilität zu und begrenzt so den sicher herstellbaren Durchmesser der Gebinde. Es ist also ein Ziel das Gebinde stets möglichst stramm und automatisch nachspannend zu spannen.

DE 10 2010 037 989 B4 offenbart einen Gurtspanner, der auf einem Aufroller mit Rückstellratsche basiert, womit eine Feder als Energiespeicher vorgespannt wird, so dass wenn der Gurt der Zugkraft der Feder nachgibt, der Gurt dann weiter eingezogen wird. Die Nachspannkraft und die Nachspannlänge des Gurtes werden durch die Feder vorgegeben. Die Federkraft stützt sich anteilig auf dem Gebinde ab und bewirkt eine zur Mitte des Gebindes gerichtete, das Gebinde verdichtende Kraft. Das Drehmoment auf den Aufroller und die Zugkraft auf den Gurt ist dabei ziemlich begrenzt.

Daher besteht eine **Aufgabe der Erfindung,** um die Nachteile aus dem Stand der Technik zu beseitigen, in der Bereitstellung eines Gurtspanners für einen Gurt zu einem Umspannen eines Gebinde balkenförmiger Körper, mit dem eine besonders große Zugkraft auf den Gurt ausgeübt werden kann und von dem der Gurt bei einem Nachgeben automatisch weiter aufgenommen wird, um den Gurt gespannt zu halten.

Die vorstehenden Aufgaben sowie weitere der Beschreibung zu entnehmende Aufgaben werden von einem Gurtspanner gemäß den Merkmalen des unabhängigen Anspruchs 1 gelöst. Weitere vorteilhafte Ausführungsformen der Erfindung sind in den abhängigen Ansprüchen angegeben.

Der erfindungsgemäße Gurtspanner für ein Gebinde von balkenförmigen Körpern umfasst dabei im Wesentlichen einen Gurt, mit dem das Gebinde umspannt wird, und einen Mechanismus der den Gurt spannt und den Gurt auch bei einem Nachgeben oder Längerwerden des Gurts automatisch federgetrieben nachspannt. Der erfindungsgemäße Gurtspanner gemäß Anspruch 1 ermöglicht eine Erzeugung besonders hoher Zugkräfte, einen einfachen und relativ kostengünstigen Aufbau und das automatische Nachspannen des Gurtes, wenn dieser nachgibt. Ein im Mechanismus implementiertes Kniehebelsystem übersetzt eine Federkraft in eine bevorzugt weitaus größere auf den Gurt wirkende Zugkraft.

Der erfindungsgemäße Gurtspanner ermöglicht eine Erzeugung besonders hoher Zugkräfte, einen einfachen und relativ kostengünstigen Aufbau und das Nachspannen des Gurtes bei gleichzeitiger Verdichtung einer Mitte des Gebindes, wenn dieses nachgibt.

Durch den erfindungsgemäßen Gurtspanner können also Gebinde von Holzbalken unter hoher Kraft zusammengebunden, in der Mitte des Gebindes verdichtet und dabei abgesägt werden, da ein nach innen Verschieben der Holzbalken und dadurch ein Nachgeben des Gurts automatisch ausgeglichen wird durch das Nachspannen des Gurts durch den Mechanismus des erfindungsgemäßen Gurtspanners. Durch den erfindungsgemäßen Gurtspanner kann das Gebinde sicher gespannt an einer Länge abgesägt werden, ohne dass die Balken anfangen zu flattern oder sich ruckartig verschieben

Weitere Vorteile sind in der detaillierten Beschreibung vermerkt.

Eine bevorzugte Ausführungsform gemäß der vorliegenden Erfindung ist in nachfolgenden Zeichnungen und in einer detaillierten Beschreibung dargestellt, soll aber die vorliegende Erfindung nicht darauf begrenzen.

Es zeigen
Fig. 1 schematisch eine Seitenansicht einer ersten Ausbildungsform eines Gurtspanners für ein Gebinde balkenförmiger Körper mit einer Grundplatte mit einem Kniehebelmechanismus mit einem damit verbundenen länglichen Gurtrückhalter mit einem unteren und einem oberen Abschnitt, einem teils verdeckten Gurtzugelement mit Gurthaken und einem Federzugelement, das zwischen der Grundplatte und dem oberen Abschnitt des Gurtrückhalters angeordnet und jeweils damit verbunden ist;
Fig. 2 den Gurtspanner gemäß Fig. 1 schematisch von oben dargestellt, als eine Schnittansicht, geschnitten in senkrechter Richtung oberhalb der Grundplatte in Richtung zum oberen Abschnitt des Gurtrückhalters, der zusammen mit dem Federzugelement hierin nicht dargestellt ist;
Fig. 3 die gleiche Seitenansicht des Gurtspanners wie in Fig. 1, jedoch abgeschnitten nur als ein Teil ohne den oberen Abschnitt des Gurtrückhalters und ohne das Federzugelement, wobei der Gurtspanner sich in einem ausgelenkten zweiten Zustand befindet im Vergleich zu dem ersten Zustand in Fig. 1;
Fig. 4 eine in Bezug zu Fig. 1 und 3 um 90 Grad gedrehte Seitenansicht des Gurtspanners aus Fig. 1, wobei der Gurtspanner auf dem Gebinde der balkenförmigen Körper angeordnet und gespannt ist und zudem eine Aufhängevorrichtung zum Tragen des Gebindes aufweist;
Fig. 5 eine weitere Ausführungsform des Gurtspanners, der praxisnaher aufgebaut ist, wobei das Federzugelement am unteren Abschnitt des Gurtrückhalters angreift und über einen anderen Gurt, der über eine Umlenkrolle am oberen Abschnitt des Gurtrückhalters läuft und mit einem Aufwickelmittel verbunden ist, das seinerseits wiederum mit der Grundplatte verbunden ist, um einen Zug auf die Grundplatte vom Gebinde weg zu bewirken;
Fig. 6 eine weitere Ausführungsform eines Teils des Gurtspanners in Seitenansicht im nicht ausgelenkten ersten Zustand;
Fig. 7 die Seitenansicht der weiteren Ausführungsform des Gurtspanners gemäß Fig. 6 im ausgelenkten zweiten Zustand.

### Detaillierte Beschreibung von Ausführungsbeispielen

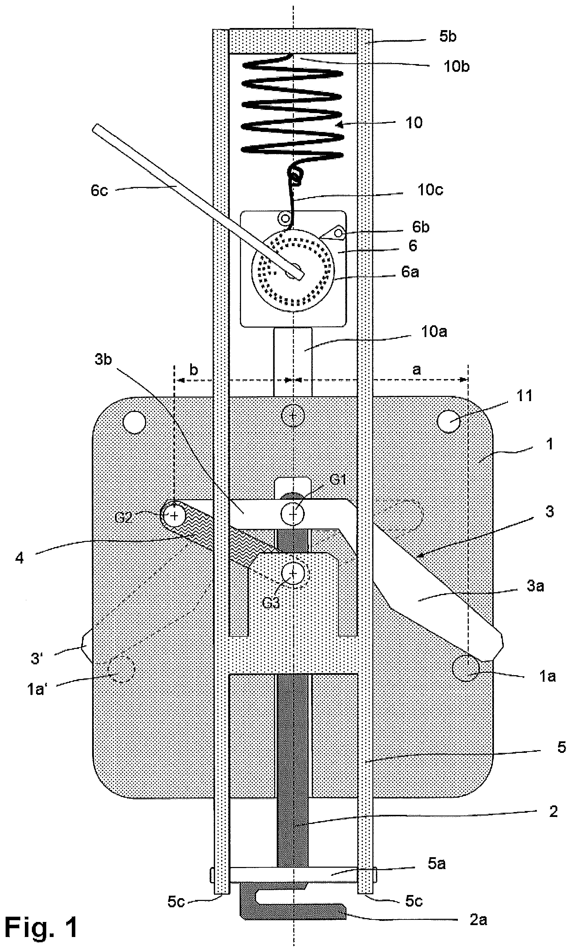

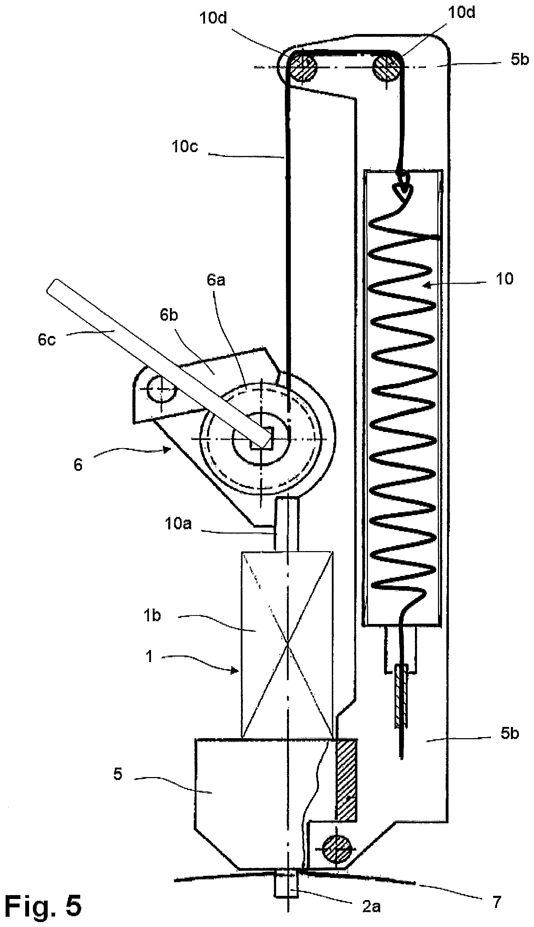

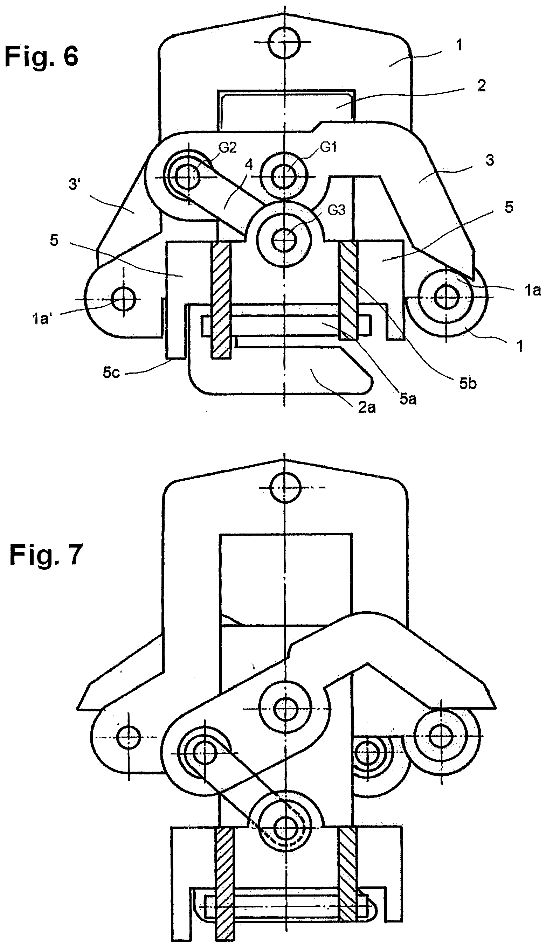

Fig. 1 - Fig. 4 zeigen einen Gurtspanner für ein Gebinde balkenförmiger Körper gemäß einer schematischen ersten Ausbildungsform. Fig. 5 zeigt den Gurtspanner in einer zweiten Ausbildungsform, die praxisorientierter ist. Die Figuren 6 und 7 zeigen einen Kniehebelmechanismus in praxisorientierter Form.

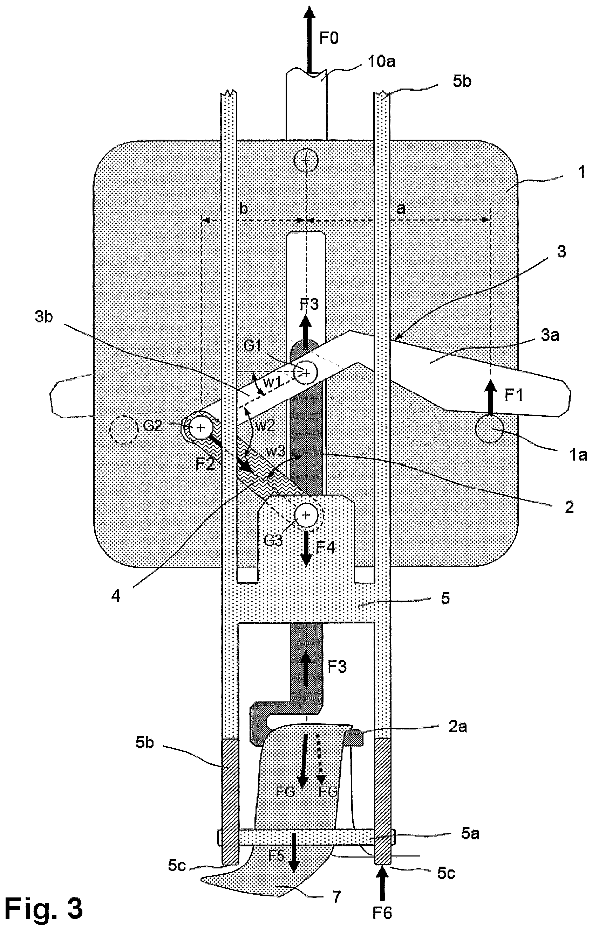

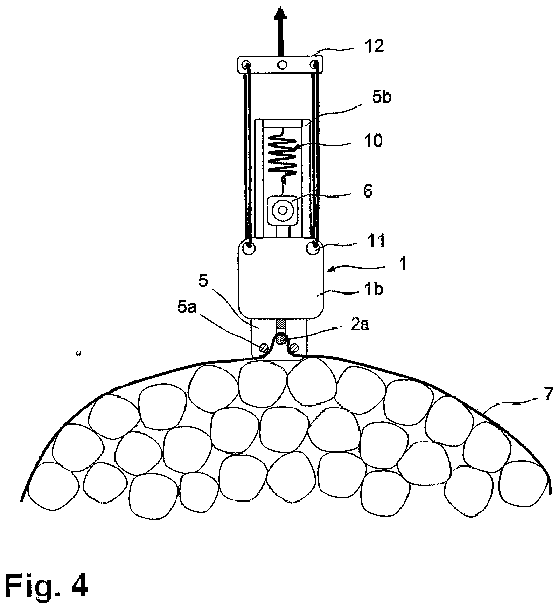

Allgemein umfasst der erfindungsgemäße Gurtspanner folgende Komponenten:
- einen Gurt 7 zum Umspannen und Zusammenhalten des Gebindes, der in Fig. 3 und Fig. 4 dargestellt ist;
- eine Grundplatte 1, die sich in Richtung eines Lots erstreckt, die an einem oberen Ende durch das Lot verlaufend einen Aufhängeabschnitt aufweist. Als das Lot ist gemäß Zeichnungen ein senkrechtes Lot dargestellt. Zur Klarheit bezieht sich das Lot jedoch auf ein Zentrum des Gebindes, wobei der Gurtspanner auch insgesamt beispielsweise um 90° gedreht vorstellbar ist, wenn er seitlich am Gebinde angeordnet ist. Als Aufhängeabschnitt wird ein Abschnitt oder Bereich der Grundplatte bezeichnet, an der die Grundplatte entgegen der Lotrichtung gezogen und in anderen Worten "aufgehängt" wird, wobei man ihn auch als Zugabschnitt bezeichnen kann. Die Grundplatte weist mindestens ein Auflageelement 1a auf, das unterhalb des Aufhängeabschnitts und seitlich mit einem Abstand zum Lot angeordnet ist. Zudem weist die Grundplatte 1 eine längliche Aussparung auf, die unterhalb dem Aufhängeabschnitt beginnt und entlang dem Lot nach unten verläuft, so dass die Grundplatte unten offen ist. Zur Klarheit wird beispielsweise als Äquivalent angesehen, wenn die Aussparung in der Grundplatte 1 unten enden würde und die Grundplatte also nicht offenwäre, wenn ein darin verlaufendes Gurtzugelement 2 um den unteren Steg herum gebaut wäre. Die Beschreibung sollte hier eher auf das Wesentliche konzentriert sein;
- das Gurtzugelement 2 ist länglich und in der länglichen Aussparung der Grundplatte 1 entlang dem Lot verschieblich ausgebildet und weist einen Haltepunkt an einem oberen Ende und einen Gurthaken 2a an einem gegenüberliegenden unteren Ende auf. Der Gurthaken 2a ist ausgebildet, den Gurt 7 an einem oberen Scheitelpunkt zu untergreifen und den Gurt 7 nach oben zu ziehen;
- den Kniehebelmechanismus, der Folgendes umfasst:
   Ein Kniehebel 3 weist einen ersten 3a und einen gegenüberliegenden zweiten Kniehebelarm 3b auf, die starr miteinander verbunden sind und in einer Mitte dazwischen ein erstes Drehgelenk G1 aufweisen. Dabei ist der Kniehebel 3 um das erste Drehgelenk G1 in einer Ebene parallel zur Grundplatte 1 drehbar. Das erste Drehgelenk G1 ist mit dem Haltepunkt des Gurtzugelements 2 verbunden und zieht dieses nach oben, wobei ein äußeres Ende des ersten Kniehebelarms 3a auf dem Auflageelement 1a aufliegt und davon getragen wird. Ein gegenüberliegendes äußeres Ende des zweiten Kniehebelarms 3b weist ein zweites Drehgelenk G2 auf, das mit einem ersten Ende eines dritten Kniehebelarms 4 verbunden ist und das eine zweite Kraftkomponente F2 in den dritten Kniehebel 4 einleitet. Dabei weist der dritte Kniehebelarm 4 an einem dem ersten Ende gegenüberliegenden Ende ein drittes Drehgelenk G3 auf;
- einen Gurtrückhalter 5, der in Richtung des Lots am oberen Ende einen oberen Abschnitt 5b, einen gegenüberliegenden unteren Abschnitt und einen dazwischenliegenden mittleren Abschnitt aufweist. Dabei ist der Gurtrückhalter 5 gegen die Grundplatte 1 und das Gurtzugelement 2 in Richtung des Lots verschiebbar - und umgekehrt.

Der untere Abschnitt ist kastenförmig mit einem unteren Anschlag 5c und zwei Gurtrückhaltebolzen 5a ausgebildet, um mit dem unteren Anschlag 5c an einem oberen Scheitelpunkt der balkenförmigen Körper und damit auf dem Gebinde aufzuliegen. Die Gurtrückhaltebolzen 5a sind beidseitig zu dem Gurthaken 2a, der in einer Ebene dazwischen liegt, so angeordnet, dass der vom Gurthaken 2a hochgezogene Gurt 7 zu beiden Seiten des Gurthakens 2a von den Gurtrückhaltebolzen 5a nach unten zum Gebinde hin niedergehalten wird. Dabei sind die Gurtrückhaltebolzen 5a vom Anschlag 5c in Lotrichtung soweit beabstandet, dass der Gurt 7 dazwischen Spiel hat und verschiebbar bleibt.

Der mittlere Abschnitt ist drehgelenkig mit dem dritten Drehgelenk G3 des dritten Kniehebelarms 4 verbunden und leitet dadurch eine vierte Kraftkomponente F4, die eine Komponente der zweiten Kraftkomponente F2 ist, in Lotrichtung zum unteren Abschnitt und dem unteren Anschlag 5c weiter.

Der Gurtrückhalter 5 ist in Lotrichtung mit einer Länge ausgebildet, dass der obere Abschnitt 5b in Lotrichtung zum Gebinde hin gesehen oberhalb dem Aufhängeabschnitt der Grundplatte 1 angeordnet ist; das ist notwendig, um das oberen Ende der Grundplatte 1 in Richtung des oberen Abschnitts 5b des Gurtrückhalters 5 ziehen zu können;
- ein Zugfederelement 10, das eine federartige Kraft-Längendehnung zwischen einer ersten Kontaktstelle 10a und einer zweiten Kontaktstelle 10b aufweist, wobei das Zugmittel so ausgebildet und angeordnet ist, dass die erste Kontaktstelle 10a am Aufhängeabschnitt der Grundplatte 1 und die zweite Kontaktstelle 10b am oberen Abschnitt 5b des Gurtrückhalters 5 mit einer Zugkraft angreift. Die Grundplatte 1 wird dabei entgegen der Lotrichtung zum oberen Abschnitt 5b des Gurtrückhalters 5 gezogen. Dadurch wird das Gurtzugelement 2 nach oben bzw. vom Gebinde weg gezogen, wobei der Gurtrückhalter 5 mit einer Kraft F6 gegen das Gebinde gepresst wird, wobei letztlich der Gurt 7 gespannt wird.

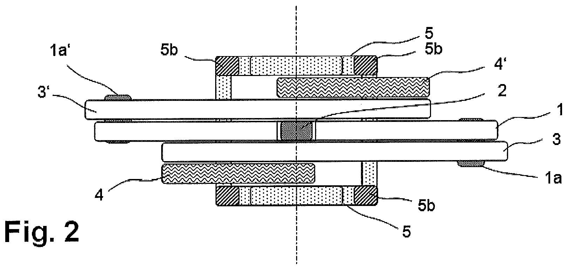

In Fig. 2 ist eine Ansicht des Gurtspanners von Fig. 1 von oben dargestellt, wobei insbesondere ein Teil des Kniehebelmechanismus durch Schnittansicht freigelegt wurde, wobei der Gurtspanner quer zur Lotrichtung oberhalb der Grundplatte geschnitten worden ist. Der obere Abschnitt 5b des Gurtrückhalters 5 und das Federzugelement 10 sind hierin nicht dargestellt. Dabei ist der Kniehebelmechanismus beidseitig zur Grundplatte 1 ausgebildet.

In Fig. 1 ist der Gurtspanner in einem ersten Zustand dargestellt, in dem der Gurthaken 2a ausgefahren ist, um dabei leichter einen Gurt einlegen zu können.

In Fig. 3 hingegen ist der Gurtspanner in einem zweiten Zustand dargestellt, in dem der Gurthaken 2a weiter als im ersten Zustand eingefahren ist und den Gurt 7 nach oben und vom Gebinde weg zieht. Darin ist auch zu sehen, dass die Rückhaltebolzen 5a den Gurt niederhalten zum Gebinde hin.

Bevorzugt ist der Gurtspanner ausgebildet, indem der Kniehebel 3, der dritte Kniehebelarm 4 und das Auflageelement 1a sowohl auf einer ersten Seite der Grundplatte 1 angeordnet sind und auf einer gegenüberliegenden zweiten Seite der Grundplatte 1 ein anderer Kniehebel 3', ein anderer dritter Kniehebelarm 4' und ein anderes Auflageelement 1a' ausgebildet sind. Dabei sind die jeweils gleichen Komponenten der ersten Seite und der zweiten Seite zum Lot hin in gespiegelter Form und Anordnung ausgeführt, wie beispielhaft in Fig. 1 strichliert dargestellt ist. Eine bevorzugte anderer Betrachtungsweise ist, dass der andere Kniehebel 3' zum Kniehebel 3, der andere dritte Kniehebelarm 4' zum dritten Kniehebelarm 4 und das andere Auflageelement 1a' zum Auflageelement 1a am Lot gespiegelt ausgebildet und angeordnet sind. Dabei weist der andere Kniehebelarm 3' demgemäß einen anderen ersten 3a' und einem anderen zweiten Kniehebelarm 3b' mit einem dazwischenliegenden anderen ersten Drehgelenk G1' auf. Zur Klarheit ist beispielsweise der Wortlaut "anderes Drehgelenk" gleichbedeutend mit "weiteres Drehgelenk", und sie müssen also nicht zwangsläufig andersartig ausgebildet sein. Dabei liegt der andere Kniehebel 3' mit einem äußeren Ende des anderen ersten Kniehebelarms 3a' auf dem anderen Auflageelement 1a' auf und ist über das andere erste Drehgelenk G1' mit dem oberen Ende des Gurtzugelements 2 verbunden. Dabei ist der andere dritte Kniehebelarm 4' über ein anderes zweites Drehgelenk G2' mit einem äußeren Ende des anderen zweiten Kniehebelarms 3b' verbunden und über ein gegenüberliegendes anderes drittes Drehgelenk G3' mit dem mittleren Abschnitt des Gurtrückhalters 5 verbunden. Dabei ist der Gurtrückhalter 5 U-kastenförmig mit einem ersten U-Schenkel zu einem dritten Hebelarm 4 hin und einem zweiten U-Schenkel zum anderen dritten Hebelarm 4' hin ausgebildet. Verglichen mit einer einseitigen Ausführung, wie eingangs vor diesem Absatz beschrieben, halbieren sich die Kräfte am Kniehebel 3, am dritten Kniehebelarm 4 und am Auflageelement 1a, die in Lotrichtung auf den jeweiligen Kniehebel 3, den dritten Kniehebelarm 4 und auf das Auflageelement 1a wirken. Und es kompensieren sich zudem horizontale Kraftkomponenten senkrecht zum Lot zwischen dem Kniehebel 3 und dem anderen Kniehebel 3' am Gurtzugelement 2 und zwischen dem dritten Kniehebelarm 4 und dem anderen Kniehebelarm 4' am Gurtrückhalter 5.

Eine bevorzugte jeweilige Führung entlang des Lots für das Gurtzugelement 2 und/oder für den Gurtrückhalter kann dadurch wesentlich einfacher und schwächer oder ganz ausfallen. Im Vergleich zu einer einseitigen Ausführung des Kniehebels 3 und des dritten Kniehebelarms 4 halbieren sich bei der zweiseitigen Ausführungsform des jeweiligen Kniehebels 3 und des jeweiligen dritten Kniehebelarms 4 die senkrechten Kraftkomponenten oder Kräfte in Lotrichtung, die sich dann in der Grundplatte 1, im Gurtzugelement 2 und im Gurtrückhalter 5 wieder summieren. Anders ausgedrückt ist das oben beschriebene Kniehebelsystem auf der anderen Seite der Grundplatte 1 identisch und symmetrisch um 180° gedreht angeordnet, so dass sie entgegengesetzt wirken und sich die Horizontalkräfte kompensieren.

Bevorzugt sind das jeweilige erste G1, zweite G2 und dritte Drehgelenk G3 und das Auflageelement 1a kraftschlüssig miteinander, um in Lotrichtung jeweils eine Kraft oder eine Kraftkomponente zu übertragen.

Bevorzugt liegen die Grundplatte 1, der Kniehebel 3, und der Gurthaken 2a in jeweils einer Ebene, die parallel zu einer Längsrichtung der balkenförmigen Körper ist, wobei der Gurt 7 quer dazu verläuft.

Alternativ bevorzugt liegen die Grundplatte 1, der Kniehebel 3 und der dritte Kniehebelarm 4 in jeweils einer Ebene, die quer zur Längsrichtung der balkenförmigen Körper verläuft, wobei der Gurthaken 2a in Längsrichtung der balkenförmigen Körper verläuft.

Bevorzugt ist der Kniehebelmechanismus mit dem mindestens einen Kniehebel 3, dem mindestens einen dritten Kniehebelarm 4 sowie dem Gurtzugelement 2 und dem Gurtrückhalter 5 so ausgebildet, dass sich in Lotrichtung die dritte Kraft F3 am Gurtzugelement 2 und die vierte Kraft F4 auf den Gurtrückhalter 5 in einem Bereich mit zunehmender Auslenkung zwischen dem Gurtzugelement 2 und dem Gurtrückhalter 5 vergrößert.

Gemäß einer ersten bevorzugten Ausbildungsform des Gurtspanners umfasst das Zugfederelement 10 mindestens eine Zugfeder mit einem ersten und einem zweiten Zugfederende, ein seil- oder gurtartiges flexibles Verbindungsmittel 10c mit einem ersten und einem zweiten Verbindungsmittelende und ein Aufwickelmittel 6, die in Lotrichtung der Reihe nach angeordnet sind. Dabei ist das erste Zugfederende mit dem oberen Abschnitt 5b des Gurtrückhalters 5 verbunden und das zweite Zugfederende mit dem ersten Verbindungsmittelende verbunden ist. Das zweite Verbindungsmittelende ist mit dem Aufwickelmittel 6 verbunden, das die erste Kontaktstelle 10a darstellt und seinerseits mit dem Aufhängeabschnitt der Grundplatte 1 verbunden ist. Dabei weist das Aufwickelmittel 6 eine Trommel 6a, die das zweite Verbindungsmittelende aufgewickelt hält, und eine Rotationssperre 6b auf, die die Trommel 6a an einem Rücklauf oder Abwickeln hindert und sperrt. Die Rotationssperre 6b ist bevorzugt entriegelbar oder entsperrbar ausgeführt. Ein mit der Trommel 6a verbundener Hebelarm 6c ermöglicht das Aufwickeln des zweiten Verbindungsmittelendes auf der Trommel 6a, wodurch die Zugfeder und letztlich der Gurt 7 gespannt werden.

Gemäß einer weiteren bevorzugten und praxisnäheren Ausbildungsform des Gurtspanners umfasst das Zugfederelement 10 ebenso die mindestens eine Zugfeder mit dem ersten und dem zweiten Zugfederende, das seil- oder gurtartiges flexibles Verbindungsmittel 10c mit dem ersten und dem zweiten Verbindungsmittelende und das Aufwickelmittel 6. Dabei ist jedoch das erste Zugfederende mit dem unteren Abschnitt des Gurtrückhalters 5 verbunden, und der obere Abschnitt 5b des Gurtrückhalters 5 ist mit mindestens einer Umlenkrolle 10d so ausgebildet, um das Verbindungsmittel 10c darüber so laufen zu lassen, dass das zweite Verbindungsmittelende oberhalb des Aufhängeabschnitts der Grundplatte 1 in Lotrichtung zur Grundplatte verläuft. Das erste Verbindungsmittelende ist mit dem zweiten Zugfederende verbunden, wobei das Verbindungsmittel 10c vom ersten Verbindungsmittelende aus weiter hoch und um die Umlenkrolle 10d herum und von der Umlenkrolle 10c weiter in Lotrichtung zum Aufhängeabschnitt der Grundplatte 1 verläuft und damit verbunden ist. Zwischen dem zweiten Verbindungsmittelende und dem Aufhängeabschnitt ist das Aufwickelmittel 6 angeordnet, die die erste Kontaktstelle 10a mit dem Aufhängeabschnitt darstellt. Dabei weist das Aufwickelmittel 6 die Trommel 6a, die das zweite Verbindungsmittelende aufgewickelt hält, und die Rotationssperre 6b auf, die die Trommel 6a am Rücklauf oder dem Abwickeln hindert und sperrt. Die Rotationssperre 6b ist bevorzugt entriegelbar oder entsperrbar ausgeführt. Der mit der Trommel 6a verbundene Hebelarm 6c ermöglicht das Aufwickeln des zweiten Verbindungsmittelendes auf der Trommel 6a, wodurch die Zugfeder und letztlich der Gurt 7 gespannt werden.

Gemäß einer weiteren bevorzugten alternativen Ausbildungsform des Gurtspanners umfasst das Zugfederelement 10 ebenso die mindestens eine Zugfeder mit dem ersten und dem zweiten Zugfederende, das seil- oder gurtartiges flexibles Verbindungsmittel 10c mit dem ersten und dem zweiten Verbindungsmittelende und das Aufwickelmittel 6. Dabei ist das erste Zugfederende mit dem unteren Abschnitt des Gurtrückhalters 5 verbunden, und der obere Abschnitt 5b des Gurtrückhalters 5 ist mit der mindestens einer Umlenkrolle 10d so ausgebildet, um das Verbindungsmittel 10c darüber so laufen zu lassen, dass das zweite Verbindungsmittelende oberhalb des Aufhängeabschnitts der Grundplatte 1 in Lotrichtung zur Grundplatte verläuft. Das erste Verbindungsmittelende ist mit dem zweiten Zugfederende verbunden, wobei das Verbindungsmittel 10c vom ersten Verbindungsmittelende aus weiter hoch und um die Umlenkrolle 10d herum und von der Umlenkrolle 10c weiter in Lotrichtung zum Aufhängeabschnitt der Grundplatte 1 verläuft und damit verbunden ist. Nun ist das Aufwickelmittel 6 in einem Abschnitt des Verbindungsmittels 10c angeordnet, mit dem ein Abschnitt des Verbindungsmittels 10c beispielsweise durch Aufrollen verkürzt werden kann. Dabei kann das Spann- oder Verkürzungselement beispielsweise ein Aufroller sein oder ein sonstiges Gurtspannelement, das das Verbindungsmittel 10c partiell verkürzt. Durch das Verkürzen des Verbindungsmittels 10c wird die Zugfeder und letztlich der Gurt 7 gespannt.

Generell kann das flexible Verbindungsmittel 10c seil- oder gurtartig oder bandartig oder ein Federstahl sein. Das flexible Verbindungsmittel 10c kann aus einem Kunststoff, aus einem Verbundmaterial oder aus Metall sein.Gurtspanner gemäß Anspruch 6 oder 7, wobei das flexible Verbindungsmittel 10c ein Seil oder ein Gurt ist.

Bevorzugt weist das mindestens eine erste Drehgelenk G1 eine Drehachse auf, die das Lot schneidet. Bevorzugt weist das mindestens eine dritte Drehgelenk G3 eine Drehachse auf, die das Lot schneidet. Bevorzugt steht das Auflageelement 1a von der Grundplatte 1 seitlich heraus oder ist als Ausbuchtung ausgebildet, in die der erste Kniehebelarm 3a eingreift und darin in Lotrichtung aufliegt.

Bevorzugt sind die balkenförmigen Körper, oder auch nur kurz Balken genannt, Holzscheite oder Holzbalken von Baumstämmen, Baumstämme oder dergleichen sein. Dabei können die Balken entlang ihres Umfangs eine ungleichmäßige Oberfläche und Kontur aufweisen und teilweise dreieckig, viereckig oder mehreckig sein. Dabei können die Balken auch entlang ihrer Länge gekrümmt sein und unregelmäßig von einer Geraden abweichend verlaufen. Das macht es auch so schwierig die Balken und das Gebinde beispielsweise bei einem Absägen in einer bestimmten Länge währenddessen eng zusammengepresst zu halten, da bei einem Absägen einer Länge das Bund oder das Gebinde der Balken enger zusammenpasst und leicht an Umfang verliert. Dabei wird das Gebinde jedoch bei der vorliegenden Erfindung weiterhin durch den Gurt automatisch nachgespannt gehalten.

Bevorzugt umfasst der Gurtspanner zusätzlich, wie in Fig. 4 dargestellt, in der Grundplatte nahe dem oberen Ende mindestens einen und bevorzugt zwei Aufhängepunkte 11, wie beispielsweise Löcher, an denen der Gurtspanner und das Gebinde angehoben werden können. In Fig. 4 sind zwei Aufhängepunkte 11 in der Grundplatte dargestellt, durch die Seile laufen, die mit einer Aufhängevorrichtung 12 verbunden sind, an der der Gurtspanner und das Gebinde angehoben werden können, Andere Aufhängemittel sind natürlich auch vorstellbar.

Fig. 6 zeigt eine praxisorientierte weitere Ausführungsform eines Teils des Gurtspanners und insbesondere den Kniehebelmechanismus in Seitenansicht in dem ersten Zustand, in dem der Gurt leicht eingelegt werden kann.

Fig. 7 zeigt dabei die weitere Ausführungsform des Teils des Gurtspanners und insbesondere den Kniehebelmechanismus in Seitenansicht gemäß Fig. 6 im zweiten Zustand, in dem der Gurt 7 eingezogen ist.

Bevorzugt sind die Grundplatte 1, das Auflageelement 1a, der Kniehebel 3, der dritte Kniehebelarm 4, das Gurtzugelement 2, der Gurthaken 2a, die Spannarme 5b und alle Spannbolzen 5a, 6a oder Teile davon aus einem festen starren Material wie beispielsweise Metall, Aluminium, Stahl, Edelstahl, Faserverbundwerkstoff. Indem die Grundplatte 1, das Auflageelement 1a, der Kniehebel 3, der dritte Kniehebelarm 4, das Gurtzugelement 2 und der Gurthaken 2a oder Teile davon bevorzugt plattenförmig ausgebildet sind, können Sie aufeinander gleiten und sich senkrecht dazu gegeneinander halten. Auch können Torsionsmomente, die beispielsweise durch beidseitige Kniehebel 3, 3' und beidseitige dritte Kniehebelarme 4 am oberen Ende des Gurtzugelements 2 durch horizontale Kräfte erzeugt werden, durch eine plattenförmige Bauweise gut aufgefangen werden.

Bevorzugt ist das Auflageelement 1a ein herausstehender Bolzen oder eine Platte, auf dem das äußere Ende des ersten Kniehebels 3a gleitet. Alternativ bevorzugt ist das Auflageelement 1a als eine Aussparung in der Grundplatte 1 ausgeführt, in die der erste Kniehebelarm 3a eingreift und sich unten abstützt. Bevorzugt umfasst die Verbindung zwischen dem ersten Kniehebel 3a und dem Auflageelement 1a ein Lager, wie beispielsweise ein Kugel- oder Rollenlager oder dergleichen.

Bevorzugt sind die Drehgelenke G1-G3 bzw. G1'-G3' einachsige Drehgelenke und umfassen bevorzugt ein Kugel- oder Rollenlager. Bevorzugt ist das Lot entlang einer Lotlinie konstant bei Verschiebungen des Kniehebels 3.

Zur Klarheit sei angemerkt, dass die Lotrichtung nicht immer vektoriell mit einer positiven und einer negativen Richtung verstanden sein muss. Der Autor hat sich jedoch bemüht, als "in Lotrichtung" die Richtung zum Zentrum des Gebindes hin zu verwenden und ansonsten bei umgekehrter Richtung "entgegen der Lotrichtung" zu verwenden.

Zur Klarheit sei angemerkt, dass sich die Begriffe "oben" und "unten" der Einfachheit wegen und der besseren Korrelation mit den senkrecht gezeichneten Figuren wegen stets auf eine senkrechte Lotrichtung beziehen. Die Lotrichtung weist also in diesem Sinne von oben nach unten.

Zur Klarheit sei angemerkt, dass wenn ein Teil mit einem anderen als "verbunden" bezeichnet wird, eine direkte Verbindung und eine indirekte Verbindung über ein weiteres dazwischengesetztes Teil vorliegen kann.

### Noch einige Anmerkungen bezogen nur auf einen bevorzugten Kniehebelmechanismus:

Die Kräfte F1-F6 sind gemäß Stand der Technik und Wissenschaft bekannt, wie sie berechnet werden können, und sie werden daher der Knappheit wegen nicht detailliert ausgeführt. Nur soweit Folgendes zu den Kräften und dem Zusammenwirken:
Über den ersten Kniehebelarm 3a erzeugt die erste Kraft F1 im ersten Drehgelenk G1 ein Moment, das am zweiten Kniehebelarm 3b eine Hebelkraft senkrecht zum zweiten Kniehebelarm 3b erzeugt. Am Ende des zweiten Kniehebelarms 3b ist das zweite Drehgelenk G2 angebracht, das gelenkig mit dem dritten Kniehebelarm 4 verbunden ist. So kann die zweite Kraftkomponente F2 der Hebelkraft, die über den zweiten Winkel W2 zwischen dem zweiten Hebelarm 3b und dem dritten Hebelarm 4 errechnet werden kann, in den dritten Hebelarm 4 eingeleitet werden. Der dritte Hebelarm 4 ist an seinem gegenüberliegenden Ende mit dem dritten Drehgelenk G3 ausgestattet und so gelenkig mit dem Gurtrückhalter 5 verbunden. Die vierte Kraftkomponente F4 wird als Komponente der zweiten Kraftkomponente F2 über das dritte Drehgelenk G3 in Richtung des Lotes nach unten auf den Gurtrückhalter 5 übertragen. Die vierte Kraftkomponente F4 errechnet sich aus dem dritten Winkel W3 zwischen dem dritten Kniehebelarm 4 und der Lotlinie. Der erste Drehwinkel W1 ist der Drehwinkel des Hebelarms 3 und bestimmt daher die Größe des zweiten Winkels W2 und des dritten Winkels W3 und dadurch auch die Größe der zweiten Kraftkomponente F2 sowie der vierten Kraftkomponente F4. Die vierte Kraftkomponente F4 wirkt senkrecht auf den Gurtrückhalter 5, der auf dem Scheitel des Gebindes aufliegt. Daher kann sich das erste Drehgelenk nur auf der Lotlinie nach oben bewegen und die dritte Kraftkomponente F3 auf das Gurtzugelement 2, das über den Gurthaken mit dem Gurt verbunden ist, übertragen. Wenn die bei auf den Scheitel des Gebindes gepresstem Gurtrückhalter 5 herrschenden Gurtkraft überwunden ist, befindet sich das Kniehebelsystem im Gleichgewicht mit den Gurtkräften, so dass die nach oben wirkende dritte Kraftkomponente F3 im Gleichgewicht mit der nach unten wirkenden Resultierenden der Gurtkräfte ist. Deshalb spannt die dritte Kraftkomponente F3 den Gurt nach, indem der Gurthaken 2a zwischen den Gurtrückhaltebolzen 5a nach oben zieht. Die Rückhaltekräfte der Rückhaltebolzen 5a wirken der dritten Kraftkomponente mit gleicher Größe entgegen. Die vierte Kraftkomponente F4 ist größer als die dritte Kraftkomponente F3, so dass ihre Differenz den Gurtrückhalter auf den Scheitel des Gebindes drückt.

Bevorzugt bewegt und dreht sich der Kniehebel 3b parallel zur Grundplatte 1. Bevorzugt sind für die parallele Bewegung dafür entsprechende Schienen oder Führungen ausgebildet. Bevorzugt ist das erste Drehgelenk G1 um eine erste Drehachse ausgebildet, die senkrecht zur Grundplatte 1 ausgebildet ist. Das erste Drehgelenk G1 kann sich dabei mit dem Gurtzugelement 2 und dem Kniehebel 3 entlang des Lots bewegen, solange kein Gleichgewichtszustand vorherrscht. Dabei ist ein äußeres Ende des ersten Kniehebelarms 3a ausgebildet, auf dem Auflageelement 1a aufzuliegen und dabei eine erste Kraft F1 aufzunehmen, die letztlich den Kniehebel 3 mit dem Gurtzugelement 2 trägt und die Gurtspannung erzeugt.

Da das Auflageelement 1a vom Lot seitlich entfernt angeordnet ist, entsteht durch die erste Kraft F1 am Kniehebel 3 um das erste Drehgelenk G1 ein erstes Drehmoment, dem am gegenüberliegenden äußeren Ende des zweiten Kniehebelarms 3b durch ein Gegendrehmoment entgegengewirkt werden muss. Dafür weist der zweite Kniehebelarm 3b am zum ersten Drehgelenk G1 gegenüberliegenden äußeren Ende ein zweites Drehgelenk G2 auf, über das eine Kraft eingeleitet wird, die für den Gleichgewichtszustand das Gegendrehmoment erzeugt. In Fig. 3 sind vereinfacht einige wesentliche Kräfte als Pfeile dargestellt, die auf die Komponenten, wie beispielsweise den Kniehebel 3, das Gurtzugelement 2 und den Gurtrückhalter 5 wirken. Das zweite Drehgelenk G2 hat bevorzugt eine zweite Drehachse, die parallel zur ersten Drehachse ist.

In Fig. 3 sind zur Veranschaulichung der wirkenden Kräfte noch die fünfte Kraft F5, die mit gleicher Größe der dritten Kraftkomponente F3 entgegen wirkt und über die Gurtrückhaltebolzen 5a vor dem Einzug des Gurtes durch den Gurthaken 2a den Gurt am Durchmesser des Gebindes nach unten drückt, und die sechste Kraft F6 eingezeichnet, die auf den Scheitel des Gebindes drückt.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen nur der besseren Verständlichkeit und beschränken die Ansprüche in keiner Weise auf die in den Figuren dargestellten Formen.

### Bezugszeichenliste

- 1: Grundplatte
- 1a: Auflageelement
- 2: Gurtzugelement
- 2a: Gurthaken
- 3: Kniehebel
- 3a: erster Kniehebelarm
- 3b: zweiter Kniehebelarm
- 4: dritter Kniehebelarm
- 5: Gurtrückhalter
- 5a: Gurtrückhaltebolzen
- 5b: oberer Abschnitt des Gurtrückhalters als Spannarm
- 5c: Anschlag
- 6: Aufwickelmittel
- 6a: Trommel
- 6b: Rotationssperre
- 6c: Hebelarm
- 7: Gurt
- 10: Zugfederelement
- 10a: erste Kontaktstelle
- 10b: zweite Kontaktstelle
- 10c: Verbindungsmittel
- 10d: Umlenkrolle
- 11: Aufhängepunkt
- 12: Aufhängevorrichtung
- a, b: erster, zweiter Hebelarm
- F0, F1 - F6: Kraft, erste - sechste Kraft
- G1, G2, G3: erstes, zweites, drittes Drehgelenk
- W1, W2, W3: Winkel zwischen den Kniehebeln

## Patentansprüche

1. Gurtspanner für ein Gebinde balkenförmiger Körper, umfassend:
a) einen Gurt (7) zum Umspannen und Zusammenhalten des Gebindes;
b) eine Grundplatte (1), die sich in Richtung eines Lots erstreckt, die an einem oberen Ende durch das Lot verlaufend einen Aufhängeabschnitt aufweist, mindestens ein Auflageelement (1a) aufweist, das unterhalb des Aufhängeabschnitts und seitlich mit einem Abstand zum Lot angeordnet ist, und eine längliche Aussparung aufweist, die unterhalb dem Aufhängeabschnitt beginnt und entlang dem Lot nach unten verläuft,
**dadurch gekennzeichnet, dass** die längliche Aussparung unten offen ist und der Gurtspanner weiterhin umfasst:
c) ein Gurtzugelement (2), das länglich und in der länglichen Aussparung der Grundplatte (1) entlang dem Lot verschieblich ausgebildet ist, mit einem Haltepunkt an einem oberen Ende und einem Gurthaken (2a) an einem gegenüberliegenden unteren Ende, wobei der Gurthaken (2a) den Gurt (7) an einem oberen Scheitelpunkt untergreift und den Gurt (7) nach oben zieht;
d) einen Kniehebel (3) mit einem ersten (3a) und einem gegenüberliegenden zweiten Kniehebelarm (3b), die starr miteinander verbunden sind und in einer Mitte dazwischen ein erstes Drehgelenk (G1) aufweisen, wobei der Kniehebel (3) um das erste Drehgelenk (G1) in einer Ebene parallel zur Grundplatte (1) drehbar ist und das erste Drehgelenk (G1) mit dem Haltepunkt des Gurtzugelements (2) verbunden ist und dieses nach oben zieht, wobei ein äußeres Ende des ersten Kniehebelarms (3a) auf dem Auflageelement (1a) aufliegt und davon getragen wird und ein gegenüberliegendes äußeres Ende des zweiten Kniehebelarms (3b) ein zweites Drehgelenk (G2) aufweist, das mit einem ersten Ende eines dritten Kniehebelarms (4) verbunden ist und das eine zweite Kraftkomponente (F2) in den dritten Kniehebel (4) einleitet, wobei der dritte Kniehebelarm (4) an einem dem ersten Ende gegenüberliegenden Ende ein drittes Drehgelenk (G3) aufweist;
e) einen Gurtrückhalter (5), der in Richtung des Lots am oberen Ende einen oberen Abschnitt (5b), einen gegenüberliegenden unteren Abschnitt und einen dazwischenliegenden mittleren Abschnitt aufweist, und der gegen die Grundplatte (1) und das Gurtzugelement (2) in Richtung des Lots verschiebbar ist,
wobei der untere Abschnitt kastenförmig mit einem unteren Anschlag (5c) und zwei Gurtrückhaltebolzen (5a) ausgebildet ist, um mit dem unteren Anschlag (5c) an einem oberen Scheitelpunkt der balkenförmigen Körper aufzuliegen, wobei die Gurtrückhaltebolzen (5a) beidseitig zu dem Gurthaken (2a), der in einer Ebene dazwischen liegt, so angeordnet sind, dass der vom Gurthaken (2a) hochgezogene Gurt (7) zu beiden Seiten des Gurthakens (2a) von den Gurtrückhaltebolzen (5a) nach unten niedergehalten wird, wobei die Gurtrückhaltebolzen (5a) vom Anschlag (5c) in Lotrichtung soweit beabstandet sind, dass der Gurt (7) dazwischen Spiel hat und verschiebbar bleibt,
wobei der mittlere Abschnitt drehgelenkig mit dem dritten Drehgelenk (G3) des dritten Kniehebelarms (4) verbunden ist und dadurch eine vierte Kraftkomponente (F4), die eine Komponente der zweiten Kraftkomponente (F2) ist, in Lotrichtung zum unteren Abschnitt und dem unteren Anschlag (5c) weiterleitet;
wobei der Gurtrückhalter (5) in Lotrichtung mit einer Länge ausgebildet ist, dass der obere Abschnitt (5b) in Lotrichtung zum Gebinde hin gesehen oberhalb dem Aufhängeabschnitt der Grundplatte (1) angeordnet ist; und
f) ein Zugfederelement (10), das eine federartige Kraft-Längendehnung zwischen einer ersten Kontaktstelle (10a) und einer zweiten Kontaktstelle (10b) aufweist, wobei das Zugmittel so ausgebildet und angeordnet ist, dass die erste Kontaktstelle (10a) am Aufhängeabschnitt der Grundplatte (1) und die zweite Kontaktstelle (10b) am oberen Abschnitt (5b) des Gurtrückhalters (5) mit einer Zugkraft angreift, wobei die Grundplatte (1) in Lotrichtung zum oberen Abschnitt (5b) des Gurtrückhalters (5) gezogen und dadurch der Gurt (7) gespannt wird.

2. Gurtspanner gemäß Anspruch 1, wobei der Kniehebel (3), der dritte Kniehebelarm (4) und das Auflageelement (1a) auf einer ersten Seite der Grundplatte (1) angeordnet sind und auf einer gegenüberliegenden zweiten Seite der Grundplatte (1) ein anderer Kniehebel (3'), ein anderer dritter Kniehebelarm (4') und ein anderes Auflageelement (1a') ausgebildet sind, die jeweils in Bezug zu einer jeweils gleichen Komponente der ersten Seite eine zum Lot hin gespiegelte Form und Anordnung aufweisen, wobei der andere Kniehebelarm (3') demgemäß einen anderen ersten (3a') und einem anderen zweiten Kniehebelarm (3b') mit einem dazwischenliegenden anderen ersten Drehgelenk (G1') aufweist, wobei der andere Kniehebel (3') mit einem äußeren Ende des anderen ersten Kniehebelarms (3a') auf dem anderen Auflageelement (1a') aufliegt und über das andere erste Drehgelenk (G1') mit dem oberen Ende des Gurtzugelements (2) verbunden ist, wobei der andere dritte Kniehebelarm (4') über ein anderes zweites Drehgelenk (G2') mit einem äußeren Ende des anderen zweiten Kniehebelarms (3b') verbunden ist und über ein gegenüberliegendes anderes drittes Drehgelenk (G3') mit dem mittleren Abschnitt des Gurtrückhalters (5) verbunden ist, wobei der Gurtrückhalter (5) U-kastenförmig mit einem ersten U-Schenkel zu einem dritten Hebelarm (4) hin und einem zweiten U-Schenkel zum anderen dritten Hebelarm (4') hin ausgebildet ist,
wodurch sich Kräfte, verglichen mit einer einseitigen Ausführung des Kniehebels (3), des dritten Kniehebelarms (4) und des Auflageelements (1a), in Lotrichtung auf den jeweiligen Kniehebel (3), den dritten Kniehebelarm (4) und auf das Auflageelement (1a) jeweils halbieren, wobei sich horizontale Kraftkomponenten senkrecht zum Lot des Kniehebels (3) und des anderen Kniehebels (3') am Gurtzugelement (2) kompensieren und des dritten Kniehebelarms (4) und des anderen Kniehebelarms (4') am Gurtrückhalter (5) ebenso gegenseitig kompensieren.

3. Gurtspanner gemäß Anspruch 1 oder 2, wobei das jeweilige erste (G1), zweite (G2) und dritte Drehgelenk (G3) und das Auflageelement (1a) kraftschlüssig sind, um in Lotrichtung jeweils eine Kraft oder eine Kraftkomponente zu übertragen.

4. Gurtspanner gemäß einem oder mehreren der vorstehenden Ansprüche, wobei die Grundplatte (1), der Kniehebel (3), und der Gurthaken (2a) jeweils in einer Ebene liegen, die parallel zu einer Längsrichtung der balkenförmigen Körper ist und der Gurt (7) quer dazu verläuft; oder
wobei die Grundplatte (1), der Kniehebel (3) und der dritte Kniehebelarm (4) jeweils in einer Ebene liegen, die quer zur Längsrichtung der balkenförmigen Körper und der Gurthaken (2a) in Längsrichtung der balkenförmigen Körper verläuft.

5. Gurtspanner gemäß einem oder mehreren der vorstehenden Ansprüche, wobei ein Kniehebelsystem aus dem mindestens einen Kniehebel (3), dem mindestens einen dritten Kniehebelarm (4) sowie dem Gurtzugelement (2) und dem Gurtrückhalter (5) so ausgebildet sind, dass sich in Lotrichtung die dritte Kraft (F3) am Gurtzugelement (2) und die vierte Kraft (F4) auf den Gurtrückhalter (5) in einem Bereich mit zunehmender Auslenkung zwischen dem Gurtzugelement (2) und dem Gurtrückhalter (5) vergrößert.

6. Gurtspanner gemäß einem oder mehreren der vorstehenden Ansprüche, wobei das Zugfederelement (10) in Lotrichtung mindestens eine Zugfeder mit einem ersten und einem zweiten Zugfederende, ein seil- oder gurtartiges flexibles Verbindungsmittel (10c) mit einem ersten und einem zweiten Verbindungsmittelende und ein Aufwickelmittel (6) umfasst,
wobei das erste Zugfederende mit dem oberen Abschnitt (5b) des Gurtrückhalters (5) verbunden und das zweite Zugfederende mit dem ersten Verbindungsmittelende verbunden ist, wobei das zweite Verbindungsmittelende mit dem Aufwickelmittel (6) verbunden ist, das die erste Kontaktstelle (10a) darstellt und mit einer Trommel (6a) und einer Rotationssperre (6b) ausgebildet ist, um das zweite Verbindungsmittelende auf der Trommel (6a) über einen Hebelarm (6c) aufzuwickeln und durch die Rotationssperre (6b) rückwärtig zu sperren.

7. Gurtspanner gemäß einem oder mehreren der vorstehenden Ansprüche 1-5, wobei das Zugfederelement (10) die mindestens eine Zugfeder mit dem ersten und dem zweiten Zugfederende, das seil- oder gurtartiges flexibles Verbindungsmittel (10c) mit dem ersten und dem zweiten Verbindungsmittelende und das Aufwickelmittel (6) umfasst,
wobei das erste Zugfederende mit dem unteren Abschnitt des Gurtrückhalters (5) verbunden und das zweite Zugfederende mit dem ersten Verbindungsmittelende verbunden ist und der obere Abschnitt (5b) des Gurtrückhalters (5) mindestens eine Umlenkrolle (10d) so angeordnet aufweist, um das Verbindungsmittel (10c) darüber zu führen und das zweite Verbindungsmittelende in Lotrichtung zum Aufwickelmittel (6) zu führen womit es verbunden ist, wobei das Aufwickelmittel (6) als die erste Kontaktstelle (10a) mit dem Aufhängeabschnitt der Grundplatte (1) verbunden und mit einer Trommel (6a) und einer Rotationssperre (6b) ausgebildet ist, um das zweite Verbindungsmittelende auf der Trommel (6a) über einen Hebelarm (6c) aufzuwickeln und durch die Rotationssperre (6b) rückwärtig zu sperren.

8. Gurtspanner gemäß einem oder mehreren der vorstehenden Ansprüche 1-5, wobei das Zugfederelement (10) die mindestens eine Zugfeder mit dem ersten und dem zweiten Zugfederende, das seil- oder gurtartiges flexibles Verbindungsmittel (10c) mit dem ersten und dem zweiten Verbindungsmittelende und das Aufwickelmittel (6) umfasst,
wobei das erste Zugfederende mit dem unteren Abschnitt des Gurtrückhalters (5) verbunden ist und der obere Abschnitt (5b) des Gurtrückhalters (5) mit der mindestens einer Umlenkrolle (10d) so ausgebildet ist, um das Verbindungsmittel (10c) darüber so laufen zu lassen, dass das zweite Verbindungsmittelende oberhalb des Aufhängeabschnitts der Grundplatte (1) in Lotrichtung zur Grundplatte verläuft; wobei das erste Verbindungsmittelende mit dem zweiten Zugfederende verbunden ist, das Verbindungsmittel (10c) vom ersten Verbindungsmittelende aus weiter hoch und um die Umlenkrolle (10d) herum und von der Umlenkrolle (10c) weiter in Lotrichtung zum Aufhängeabschnitt der Grundplatte (1) verläuft und damit verbunden ist;
wobei das Aufwickelmittel (6) im Verbindungsmittel (10c) angeordnet ist und ausgebildet ist, das Verbindungsmittel (10c) durch Drücken oder Drehen eines Hebelarms (6c) gesperrt lösbar aufzurollen und zu verkürzen, wodurch die Zugfeder gespannt wird.

9. Gurtspanner gemäß Anspruch 6, 7 oder 8, wobei das flexible Verbindungsmittel (10c) ein Seil oder ein Gurt ist.

10. Gurtspanner gemäß einem oder mehreren der vorstehenden Ansprüche, wobei das mindestens eine erste Drehgelenk (G1) eine Drehachse aufweist, die das Lot schneidet; und/oder
wobei das mindestens eine dritte Drehgelenk (G3) eine Drehachse aufweist, die das Lot schneidet; und/oder
wobei das Auflageelement (1a) von der Grundplatte (1) seitlich heraussteht oder als Ausbuchtung ausgebildet ist, in die der erste Kniehebelarm (3a) eingreift und darin in Lotrichtung aufliegt.

## Claims

1. Belt tensioner for containers of bar-formed bodies, comprising
a) a belt (7) for straddling and keeping the containers together;
b)a base plate (1) extending in the direction of a perpendicular, which has a suspending portion at an upper end extending through the perpendicular, at least one resting element (1a) arranged beneath the suspending portion and laterally at a space from the perpendicular, and a longitudinal recess which begins below the suspending portion and extends downward along the perpendicular,
**characterized in that** the longitudinal recess is open at the bottom and the belt tensioner further comprises
c)a belt pulling element (2) which is longitudinal and slidable along the perpendicular in the longitudinal recess of the base plate (1), with a retaining point at an upper end and a belt hook (2a) at an opposite lower end, the belt hook (2a) engaging the belt (7) from below at an upper vertex and pulling the belt (7) upward;
d)a toggle lever (3) with a first (3a) and an opposite second toggle lever arm (3b), which are rigidly interconnected and have in a center therebetween a first revolute joint (G1), the toggle lever (3) being rotatable about the first revolute joint (G1) on a plane parallel to the base plate (1) and the first revolute joint (G1) being connected to the retaining point of the belt pulling element (2) and pulling it upward, with an outer end of the first toggle lever arm (3a) resting on the resting element (1a) and being borne by it and an opposite outer end of the second toggle lever arm (3b) having a second revolute joint (G2) which is connected to a first end of a third toggle lever arm (4) and introduces a second component of force (F2) in the third toggle lever (4), the third toggle lever arm (4) having a third revolute joint (G3) at an end opposite to the first end;
e)a belt retainer (5) which has at the upper end, in the direction of the perpendicular, an upper portion (5b), an opposite lower portion and an intermediate middle portion, and which is slidable in the direction of the perpendicular against the base plate (1) and the belt pulling element (2),
the lower portion having a box-like shape with a lower abutting point (5c) and two belt retention bolts (5a), so as to rest, with the lower abutting point (5c), on an upper vertex of the bar-formed bodies, with the belt retention bolts (5a) on both sides of the belt hook (2a), which is arranged on a plane therebetween, being arranged such that the belt (7) pulled up by the belt hook (2a) is pressed down by the belt retention bolts (5a) on both sides of the belt hook (2a); the belt retention bolts (5a) being spaced from the abutting point (5c) in the perpendicular direction such that the belt (7) has play therebetween and remains slidable,
the middle portion being pivoted to the third revolute joint (G3) of the third toggle lever arm (4), in this manner transmitting a fourth component (F4) of force which is a component of the second component (F2) of force in the perpendicular direction to the lower portion and the lower abutting point (5c);
the belt retainer (5) being formed with such a length in the perpendicular direction that the upper portion (5b) is arranged above the suspending portion of the base plate (1) in the perpendicular direction, towards the containers; and f)an extension spring element (10) with a spring-like force-elongation between a first point (10a) of contact and a second point (10b) of contact, the pulling means being adapted and arranged such that the first point (10a) of contact applies a tensile force at the suspending portion of the base plate (1) and the second point (10b) of contact applies a tensile force at the upper portion (5b) of the belt retainer (5), with the base plate (1) being pulled in the perpendicular direction towards the upper portion (5b) of the belt retainer (5), tensioning the belt (7).

2. Belt tensioner according to Claim 1, where the toggle lever (3), the third toggle lever arm (4) and the resting element (1a) are arranged on a first side of the base plate (1) and on an opposite second side of the base plate (1), another toggle lever (3'), another third toggle lever arm (4') and another resting element (1a') are formed each of which has a shape and arrangement mirroring a corresponding component on the first side with reference to the perpendicular; the other toggle lever arm (3') accordingly having another first (3a') and another second toggle lever arm (3b') with another intermediate first revolute joint (G1'); the other toggle lever (3') resting on the other resting element (1a') with an outer end of the other first toggle lever arm (3') and being connected to the upper end of the belt pulling element (2) via the other first revolute joint (G1'); the other third toggle lever arm (4') being connected to an outer end of the other second toggle lever arm (3b') via another second revolute joint (G2') and being connected to the middle portion of the belt retainer (5) via an opposite other third revolute joint (G3'); the belt retainer (5) facing in a U-box shape a third lever arm (4) with a first U-leg and the other third lever arm (4') with a second U-leg;
which causes forces, in the perpendicular direction, on the respective toggle lever (3), the third toggle lever arm (4) and on the resting element (1a) to be divided in half as compared to a unilateral embodiment of the toggle lever (3), the third toggle lever arm (4) and the resting element (1a), with horizontal components of force, perpendicular to the perpendicular of the toggle lever (3) and the other toggle lever (3'), offsetting each other at the belt pulling element (2), and of the third toggle lever arm (4) and the other toggle lever arm (4'), offsetting each other as well at the belt retainer (5).

3. Belt tensioner according to Claim 1 or 2, where the respective first (G1), second (G2) and third revolute joint (G3) and the resting element (1a) are in frictional engagement so as to transfer respectively a force or a component of force in the perpendicular direction.

4. Belt tensioner according to one or more of the above Claims, where the base plate (1), the toggle lever (3) and the belt hook (2a) are located on one plane which is parallel to a longitudinal direction of the bar-formed bodies and the belt (7) extends transversely thereto; or
where the base plate (1), the toggle lever (3) and the third toggle lever arm (4) are located on one plane which is transverse to the longitudinal direction of the bar-formed bodies and the belt hook (2a) extends in the longitudinal direction of the bar-formed bodies.

5. Belt tensioner according to one or more of the above Claims, where a toggle lever system consisting of the at least one toggle lever (3), the at least one third toggle lever arm (4), the belt pulling element (2) and the belt retainer (5) is adapted such that in the perpendicular direction, the third force (F3) on the belt pulling element (2) and the fourth force (F4) on the belt retainer (5) are enlarged in an area with increasing deflection between the belt pulling element (2) and the belt retainer (5).

6. Belt tensioner according to one or more of the above Claims, where in the perpendicular direction, the extension spring element (10) comprises at least one extension spring with a first and a second extension spring end, a rope- or belt-like flexible connecting means (10c) with a first and a second connecting means end and a winding means (6),
where the first extension spring end is connected to the upper portion (5b) of the belt retainer (5) and the second extension spring end is connected to the first connecting means end, the second connecting means end being connected to the winding means (6) which represents the first point (10a) of contact and is formed with a drum (6a) and a rotational blockage (6b) so as to wind the second connecting means end on the drum (6a) by means of a lever arm (6c) and block it on the back side by means of the rotational blockage (6b).

7. Belt tensioner according to one or more of the above Claims 1-5, where the extension spring element (10) comprises the at least one extension spring with the first and the second extension spring end, the rope- or belt-like flexible connecting means (10c) with the first and the second connecting means end and the winding means (6),
where the first extension spring end is connected to the lower portion of the belt retainer (5) and the second extension spring end is connected to the first connecting means end and the upper portion (5b) of the belt retainer (5) has at least one deflection roller (10d) arranged so as to guide the connecting means (10c) over it and to guide the second connecting means end in the perpendicular direction to the winding means (6) with which it is connected, the winding means (6) as the first point (10a) of contact being connected to the suspending portion of the base plate (1) and being formed with a drum (6a) and a rotational blockage (6b) so as to wind the second connecting means end on the drum (6a) by means of a lever arm (6c) and block it on the back side by means of the rotational blockage (6b).

8. Belt tensioner according to one or more of the above Claims 1-5, where the extension spring element (10) comprises the at least one extension spring with the first and the second extension spring end, the rope- or belt-like flexible connecting means (10c) with the first and the second connecting means end and the winding means (6),
where the first extension spring end is connected to the lower portion of the belt retainer (5) and the upper portion (5b) of the belt retainer (5) with the at least one deflection roller (10d) is adapted to make the connecting means (10c) pass over it such that the second connecting means end passes above the suspending portion of the base plate (1) in the perpendicular direction to the base plate; where the first connecting means end is connected to the second extension spring end, the connecting means (10c) extends further upward from the first connecting means end and around the deflection roller (10d) and from the deflection roller (10c) onward in the perpendicular direction to the suspending portion of the base plate (1) and is connected to it;
where the winding means (6) is arranged in the connecting means (10c) and is adapted to coil up the connecting means (10c) in a locked releasable manner and to shorten it by pressing or turning of a lever arm (6c), tightening the extension spring.

9. Belt tensioner according to Claim 6, 7 or 8, the flexible connecting means (10c) being a rope or a belt.

10. Belt tensioner according to one or more of the above Claims, the at least one first revolute joint (G1) having an axis of rotation intersecting the perpendicular; and/or
the at least one third revolute joint (G3) having an axis of rotation intersecting the perpendicular; and/or
the resting element (1a) extending laterally from the base plate (1) or being formed as a dent in which the first toggle lever arm (3a) engages and rests therein in the perpendicular direction.

## Revendications

1. Tendeur de sangle pour un paquet de corps en forme de barres, comprenant:
a) une sangle (7), destinée à enserrer et à maintenir ensemble le paquet,
b) une plaque d'embase (1), qui s'étend vers un aplomb, qui comporte sur l'extrémité supérieure un segment d'accrochage, s'écoulant à travers l'aplomb, qui comporte au moins un élément d'appui {1a) qui est placé en-dessous du segment d'accrochage et latéralement avec un écart par rapport à l'aplomb et qui comporte un évidement oblong, qui prend naissance en-dessous du segment d'accrochage et s'écoule vers le bas le long de l'aplomb,
**caractérisé en ce que** l'évidement oblong est ouvert sur le dessous et le tendeur de sangle comprend par ailleurs:
c) un élément de traction de la sangle (2), qui est conçu de forme oblongue et en étant déplaçable dans l'évidement oblong de la plaque d'embase (1) le long de l'aplomb, pourvu d'un point de retenue sur une extrémité supérieure et d'un crochet de sangle (2a) sur une extrémité inférieure opposée, le crochet de sangle (2a) s'accrochant par le dessus dans la sangle (7) sur une crête supérieure et tirant la sangle (7) vers le haut;
d) un levier à genouillère (3), pourvu d'un premier (3a) et d'un deuxième bras de levier à genouillère (3b) opposés, qui sont assemblés l'un à l'autre de manière rigide et qui comportent dans un centre entre eux une première articulation rotative (G1), le levier à genouillère (3) étant rotatif autour de la première articulation rotative (G1) dans un plan à la parallèle de la plaque d'embase (1) et la première articulation rotative (G1) étant assemblée avec le point de retenue de l'élément de traction de la sangle (2) et tirant celle-ci vers le haut, une extrémité extérieure du premier bras de levier à genouillère (3a) reposant sur l'élément d'appui (1a) et étant portée par celui-ci et une extrémité extérieure opposée du deuxième bras de levier à genouillère (3b) comportant une deuxième articulation rotative (G2) qui est assemblée avec une première extrémité d'un troisième bras de levier à genouillère (4) et qui introduit une deuxième composante de force (F2) dans le troisième levier à genouillère (4), le troisième bras de levier à genouillère (4) comportant sur l'extrémité opposée à une première extrémité une troisième articulation rotative (G3);
e) un organe de retenue de la sangle (5), qui dans la direction de l'aplomb comporte sur l'extrémité supérieure un segment supérieur (5b), un segment inférieur opposé et un segment médian intercalé et qui est déplaçable contre la plaque d'embase (1) et l'élément de traction de la sangle (2), en direction de l'aplomb,
le segment inférieur étant conçu en forme de caisson, avec une butée inférieure (5c) et avec deux boulons de retenue de la sangle (5a), pour reposer par la butée inférieure (5c) sur une crête supérieure des corps en forme de barres, les boulons de retenue de la sangle (5a) étant placés de part et d'autre du crochet de sangle (2a) qui se situe dans un plan entre eux de telle sorte que, des deux côtés du crochet de sangle (2a), la sangle (7) tirée vers le haut par le crochet de sangle (2a) soit maintenue vers le bas par les boulons de retenue de la sangle (5a), les boulons de retenue de la sangle (5a) étant écartés de la butée (5c) dans la direction de l'aplomb suffisamment loin pour que la sangle (7) dispose d'un jeu entre eux et reste déplaçable, le segment médian étant assemblé en pivotement avec la troisième articulation rotative (G3) du troisième bras de levier à genouillère (4) et retransmettant de ce fait une quatrième composante de force (F4), qui est une composante de la deuxième composante de force (F2) dans la direction de l'aplomb, vers le segment inférieur et la butée inférieure (5c);
dans la direction de l'aplomb, l'organe de retenue de la sangle (5) étant conçu d'une longueur telle que, dans la 'direction de l'aplomb, vu en direction du paquet, le
segment supérieur (5b) soit placé au-dessus du segment d'accrochage de la plaque d'embase (1); et
f) un élément à ressort de traction (10), qui fait preuve d'une dilatation longitudinale à l'effort pareille à un ressort entre un premier point de contact (10a) et un deuxième point de contact (10b), le moyen de traction étant conçu et placé de telle sorte que le premier point de contact (10a) s'engage sur le segment d'accrochage de la plaque d'embase (1) et le deuxième point de contact (10b) s'engage sur le segment supérieur (5b) de l'organe de retenue de la sangle (5) avec une force de traction, la plaque d'embase (1) étant tirée dans la direction de l'aplomb vers le segment supérieur (5b) de l'organe de retenue de la sangle (5) et la sangle (7) se tendant de ce fait.

2. Tendeur de sangle selon la revendication 1, le levier à genouillère (3), le troisième bras de levier à genouillère (4) et l'élément d'appui (1a) étant placés sur un premier côté de la plaque d'embase (1) et sur un deuxième côté opposé de la plaque d'embase (1) étant conçus un autre levier à genouillère (3'), un autre troisième bras de levier à genouillère (4') et un autre élément d'appui (1a'), qui chacun en rapport à une composante chaque fois identique du premier côté, présentent une forme et une disposition spéculaires vers l'aplomb, par conséquent, l'autre bras de levier à genouillère (3') comportant un autre premier (3a') et un autre deuxième bras de levier à genouillère (3b') avec une autre première articulation rotative (G1') intercalée, par une extrémité extérieure de l'autre premier bras de levier à genouillère (3a'), l'autre levier à genouillère (3') reposant sur l'autre élément d'appui (1a') et par l'intermédiaire de l'autre première articulation rotative (G1') étant assemblé avec l'extrémité supérieure de l'élément de traction de la sangle (2), l'autre troisième bras de levier à genouillère (4') étant assemblé par l'intermédiaire d'une autre deuxième articulation rotative (G2') avec une extrémité extérieure de l'autre deuxième bras de levier à genouillère (3b') et par l'intermédiaire d'une autre troisième articulation rotative (G3') opposée, étant assemblé avec le segment médian de l'organe de retenue de la sangle (5), l'organe de retenue de la sangle (5) étant conçu en forme de caisson en U, avec une première branche de U dirigée vers un troisième bras de levier (4) et une deuxième branche de U dirigée vers l'autre troisième bras de levier (4'),
dans la direction de l'aplomb vers le levier à genouillère (3) en question, vers le troisième bras de levier à genouillère (4) et vers l'élément d'appui (1a), comparées avec une réalisation unilatérale du levier à genouillère (3), du troisième bras de levier à genouillère (4) et de l'élément d'appui (1a), des forces se réduisant respectivement de moitié, des composantes de force horizontales se compensant à la perpendiculaire de l'aplomb du levier à genouillère (3) et de l'autre levier à genouillère (3'), sur l'élément de traction de la sangle (2) et du troisième bras de levier à genouillère (4) et de l'autre bras de levier à genouillère (4') se compensant également réciproquement sur l'organe de retenue de la sangle (5).

3. Tendeur de sangle selon la revendication 1 ou 2, la première (G1), deuxième (G2) et troisième articulation rotative (G3) respective et l'élément d'appui (1a) étant complémentaires de force, pour transmettre dans la direction de l'aplomb respectivement une force ou une composante de force

4. Tendeur de sangle selon l'une quelconque ou plusieurs des revendications précédentes, la plaque d'embase (1), le levier à genouillère (3) et le crochet de sangle (2a) se situant respectivement dans un plan qui est parallèle à une direction longitudinale des corps en forme de barres et la sangle (7) s'étendant à la transversale de cette dernière;
ou la plaque d'embase (1), le levier à genouillère (3) et le troisième bras de levier à genouillère (4) se situant chacun dans un plan qui s'écoule à la transversale de la direction longitudinale des corps en forme de barres et le crochet de sangle (2a) s'écoulant dans la direction longitudinale des corps en forme de barres.

5. Tendeur de sangle selon l'une quelconque ou plusieurs des revendications précédentes, un système de levier à genouillère, composé de l'au moins un levier à genouillère (3), de l'au moins un troisième bras de levier à genouillère (4), ainsi que de l'élément de traction de la sangle (2) et de l'organe de retenue de la sangle (5) étant conçu de telle sorte que dans la direction de l'aplomb, dans une zone à déviation croissante entre l'élément de traction de la sangle (2) et l'organe de retenue de la sangle (5), la troisième force (F3) exercée sur l'élément de traction de la sangle (2) et la quatrième force (F4) exercée sur l'organe de retenue de la sangle (5) augmentent.

6. Tendeur de sangle selon l'une quelconque ou plusieurs des revendications précédentes, dans la direction de l'aplomb, l'élément à ressort de traction (10) comprenant au moins un ressort de traction avec une première et une deuxième extrémités de ressort de traction, un moyen d'assemblage (10c) flexible, de type câble ou sangle, avec une première et une deuxième extrémités de moyen d'assemblage et un moyen d'enroulement (6),
la première extrémité du ressort de traction étant assemblée avec le segment supérieur (5b) de l'organe de retenue de la sangle (5) et la deuxième extrémité du ressort de traction étant assemblée avec la première extrémité du moyen d'assemblage, la deuxième extrémité du moyen d'assemblage étant assemblée avec le moyen d'enroulement (6) qui représente le premier point de contact (10a) et étant conçue avec un tambour (6a) et avec un blocage en rotation (6b), pour enrouler la deuxième extrémité du moyen d'assemblage sur le tambour (6a) par l'intermédiaire d'un bras de levier (6c) et la bloquer vers l'arrière par le blocage en rotation (6b).

7. Tendeur de sangle selon l'une quelconque ou plusieurs des revendications précédentes 1 à 5, l'élément à ressort de traction (10) comprenant l'au moins un ressort de traction avec la première et la deuxième extrémités de ressort de traction, le moyen d'assemblage (10c) flexible, de type câble ou sangle, avec la première et la deuxième extrémités du moyen d'assemblage et le moyen d'enroulement (6),
la première extrémité du ressort de traction étant assemblée avec le segment inférieur de l'organe de retenue de la sangle (5) et la deuxième extrémité du ressort de traction étant assemblée avec la première extrémité du moyen d'assemblage et le segment supérieur (5b) de l'organe de retenue de la sangle (5) comportant au moins un galet de renvoi (10d), placé de manière à guider le moyen d'assemblage (10c) sur celui-ci et à guider la deuxième extrémité du moyen d'assemblage dans la direction de l'aplomb vers le moyen d'enroulement (6) avec lequel elle est assemblée, en tant que premier point de contact (10a), le moyen d'enroulement (6) étant assemblé avec le segment d'accrochage de la plaque d'embase (1) et étant conçu avec un tambour (6a) et un blocage en rotation (6b), pour enrouler la deuxième extrémité du moyen d'assemblage sur le tambour (6a) par l'intermédiaire d'un bras de levier (6c) et la bloquer vers l'arrière par le blocage en rotation (6b).

8. Tendeur de sangle selon l'une quelconque ou plusieurs des revendications précédentes 1 à 5, l'élément à ressort de traction (10) comprenant l'au moins un ressort de traction avec la première et la deuxième extrémités de ressort de traction, le moyen d'assemblage (10c) flexible, de type câble ou sangle avec la première et la deuxième extrémités du moyen d'assemblage et le moyen d'enroulement (6),
la première extrémité du ressort de traction étant assemblée avec le segment inférieur de l'organe de retenue de la sangle (5) et le segment supérieur (5b) de l'organe de retenue de la sangle (5) avec l'au moins un galet de renvoi (10d) étant conçu de manière à laisser le moyen d'assemblage (10c) se dérouler sur celui-ci de telle sorte que la deuxième extrémité du moyen d'assemblage s'écoule au-dessus du segment d'accrochage de la plaque d'embase (1) dans la direction de l'aplomb, vers la plaque d'embase ; la première extrémité du moyen d'assemblage étant assemblée avec la deuxième extrémité du ressort de traction, à partir de la première extrémité du moyen d'assemblage, le moyen d'assemblage (10c) s'écoulant plus loin vers le haut et autour du galet de renvoi (10d) et à partir du galet de renvoi (10c), plus loin dans la direction de l'aplomb vers le segment d'accrochage de la plaque d'embase (1) et étant assemblé avec celui-ci;
le moyen d'enroulement (6) étant placé dans le moyen d'assemblage (10c) et conçu de manière à enrouler le moyen d'assemblage (10c) en blocage libérable, en poussant ou en faisant tourner un bras de levier (6c) et à le raccourcir, suite à quoi le ressort de traction se tend.

9. Tendeur de sangle selon la revendication 6, 7 ou 8, le moyen d'assemblage (10e) étant un câble ou une sangle.

10. Tendeur de sangle selon l'une quelconque ou plusieurs des revendications précédentes, l'au moins une première articulation rotative (G1) comportant un axe de rotation qui recoupe l'aplomb; et/ou
l'au moins une troisième articulation rotative (G3) comportant un axe de rotation qui recoupe l'aplomb; et/ou l'élément d'appui (1a) débordant latéralement de la plaque d'embase (1) ou étant conçu sous la forme d'un renflement dans lequel le premier bras de levier à genouillère (3a) s'engage et y repose dans la direction de l'aplomb.
